Europäisches Patentamt

European Patent Office

Office européen des brevets

(11) Veröffentlichungsnummer: **0 380 448**
**A1**

(12) **EUROPÄISCHE PATENTANMELDUNG**

(21) Anmeldenummer: **90810060.5**

(22) Anmeldetag: **25.01.90**

(51) Int. Cl.5: **A01N 25/26, A01C 1/06**

(30) Priorität: **25.01.89 CH 219/89**

(43) Veröffentlichungstag der Anmeldung:
**01.08.90 Patentblatt 90/31**

(84) Benannte Vertragsstaaten:
**AT DE ES FR IT**

(71) Anmelder: **Schneider, Christian**
**Selzacher Strasse 16**
**CH-4512 Bellach(CH)**

(72) Erfinder: **Schneider, Christian**
**Selzacher Strasse 16**
**CH-4512 Bellach(CH)**

(74) Vertreter: **Mohnhaupt, Dietrich et al**
**AMMANN PATENTANWAELTE AG BERN**
**Schwarztorstrasse 31**
**CH-3001 Bern(CH)**

(54) **Saatgutpillen.**

(57) Die Saatgutpillen enthalten ein oder mehrere Samenkörner, ein Gemisch aus stark tonhaltigen feinen Erden und Kompost als Trägerstoffe, wobei nur schwach quellende Substanzen zulässig sind, Bindemittel und Wasserretentionsmittel, das ein Hydrogel mit dem Vielfachen seines Gewichtes an Wasser bildet, sowie Hilfsstoffen wie Biozide und Lockerungsmittel.

Die Pillen sind auch bei Nässeeinwirkung dimensionsstabil und platzen daher nicht auf. Die tonhaltigen Stoffe und das Wasserretentionsmittel regeln den Wasserhaushalt.

Die Saatgutpillen dienen beispielsweise zur Begrünung, einschliesslich mit Bäumen, von Flächen im Gebirge.

EP 0 380 448 A1

## Saatgutpillen

Die Erfindung betrifft Saatgutpillen, auch Saatgutpellets genannt, die neben einem oder mehreren Samenkörnern Biocide wie Pestizide und Fungizide, Nährstoffe sowie in überwiegender Menge organische und anorganische Trägermaterialien enthalten.

Derartige Saatgutpillen, die an sich bereits seit langem bekannt sind, enthalten ein oder mehrere Samenkörner in einzelnen Formkörpern, die im übrigen aus organischer und/oder anorganischer Materie bestehen, vgl. etwa DE-A-1'582'513 (1970).

Saatgutpillen dienen vielfältigen Zwecken. Sie können zur verdünnenden Aussaat sehr kleiner Samenkörner wie von Karotten, Mohn, Kümmel usw., auch Gras, verwendet werden und ergeben ein Aufgehen der Saat in den gewünschten Abständen bzw. der gewünschten Dichte, ohne dass ein zeitraubendes und kostspieliges Verdünnen erforderlich ist. Weiterhin benutzt man Saatgutpillen zur Bepflanzung oder Neubepflanzung vegetationsarmer Flächen oder solcher, deren Oberfläche in Mitleidenschaft gezogen wurde, beispielsweise in Skigebieten. Das Auslegen der Pillen kann von Hand, von Streufahrzeugen oder von Flugzeugen geschehen.

In an sich bekannter Weise enthalten Saatgutpillen Nährstoffe für den keimenden Samen, Bitterstoffe zur Abschreckung von Tieren, die die Samen gern fressen, Fungizide und Pestizide sowie organische oder anorganische Streckmittel oder beides.

Saatgutpillen sind komplexe Gebilde, bei denen die einzelnen Bestandteile passend ausgewählt und in ihrer Menge dosiert werden müssen, damit der gewünschte Erfolg der Aussaat eintreten kann. Hinzu kommt, dass die einzelnen Bestandteile Wechselwirkungen miteinander und mit den Samen ausüben, die berücksichtigt werden müssen.

Schliesslich ist bei vielen Saatgutpillen auch die Art und Weise der Herstellung wichtig oder kritisch. Beispielsweise können Presslinge, die unter hohem Druck hergestellt werden, wasserundurchlässig werden.

Man hat bereits versucht, den Wasserhaushalt im Inneren der Saatgutpille zu beeinflussen. So sieht die CH-A-665 549 vor, die Pillen mit einem semipermeablen Ueberzug zu versehen, der das Austrocknen der Pillen verhindert, den Wasserzutritt aber gestattet. Allerdings wurde gefunden, dass solche Saatgutpillen nachteilig sind, gerade weil sie nicht nach aussen wasserdurchlässig sind. Ein Saatkorn widersteht im allgemeinen einer Trockenperiode besser als dauernder Feuchtigkeit, die zum Faulen führt. Es ist nicht das Saatkorn, sondern der gebildete Keimling, der feucht zu halten ist. Diese Forderung können die bekannten Saatgutpillen aber nicht erfüllen, da sie zerfallen sollen, wenn die Saat gekeimt ist. Sie haben den weiteren Nachteil, dass wegen des undifferenzierten Wasserrückhaltevermögens eine unerwünschte Vorkeimung stattfinden kann.

Die primäre Aufgabe der vorliegenden Erfindung war die Schaffung von Saatgutpillen, die auf dem bekannten Stand der Technik aufbauen, die Nachteile der bekannten Pillen jedoch nicht aufweisen, insbesondere was den Wasserhaushalt betrifft.

Eine weitere Aufgabe war die Ausarbeitung eines besonders gut geeigneten Verfahrens zur Herstellung der neuen Saatgutpillen.

Die Lösung der Aufgaben der Erfindung wird in den Saatgutpillen und dem Verfahren gesehen, die in den unab hängigen Patentansprüchen definiert sind. Besondere Ausführungsformen bilden den Gegenstand der abhängigen Patentansprüche.

Nach der Definition im Patentanspruch 1 enthalten die Saatgutpillen Bestandteile, die nun einzeln besprochen werden sollen.

## 1. Trägermaterialien

Bekannte Saatgutpillen enthalten als organisches Trägermaterial gemahlenes Stroh, Heu, Algen, Torfmoos, Holzcellulose, Rohfasermehl u.dgl. Alle diese Stoffe quellen bei Berührung mit Wasser, z.B. bei einer Beregnung. Es wurde nun gefunden, dass solche organischen Träger sehr nachteilig sind, weil sie mit Wasser quellen und die Pille in unerwünschter Weise zerfallen lassen.

Demgegenüber schlägt die Erfindung die Verwendung von solchem Trägermaterial vor, das mit Wasser höchstens eine geringe Quellung unter Volumenänderung ergibt. Dadurch wird im Gegensatz zu den Saatgutpillen des Standes der Technik erreicht, dass die Pillen bei Bewässerung, wie z.B. Beregnung, sich nicht aufblähen oder sogar platzen. Alle Vorkehrungen, die bisher getroffen wurden, um ein feuchtes, geschlossenes, umhülltes Inneres der Pillen zu schaffen - etwa nach der Lehre der CH-A-665 540 -, werden nämlich nutzlos, wenn die vorgesehene Hülle durch Quellung des Pilleninhaltes platzt und die Pille sich zerlegt, wodurch die Samen oft freigelegt werden. Dann keimen sie schlechter oder gar nicht und können auch gefressen werden.

Als Trägermaterialien haben sich erfindungsgemäss Gemische aus nichtquellenden organischen und anorganischen Stoffen bewährt, wobei der anorganische Anteil überwiegen kann. Als Beispiele seien genannt: Tongruben abraum, Tonerde, Feinsand (Schluff), Vermiculit, Perlit und andere Bläherden, sowie Gemische solcher Stoffe. Dies ist die Regel, da z.B. Feinsand allein kein gutes Trägermaterial abgibt.

Als organische Stoffe werden ganz besonders teilabgebaute Pflanzenteile bevorzugt. Es wurde nämlich gefunden, dass der sich bildende. Keimling in diesem Falle sofort assimilierbare Nährstoffe und Wachstumssubstrate vorfindet. Solche organische Stoffe sind z.B. Grünkomposterde und Humus (insbesondere Garten- oder Rübenerde).

Bläherden (Blähtone usw.) sind in relativ kleinen Mengen vorhanden, was eine Preisfrage ist. Ihr Anteil in der fertigen Pille beträgt etwa 2 bis 7 Gew.-%. Sie haben sich als Lockerungsmittel und Puffer einer eventuellen Restquellung der erfindungsgemässen Pillen bewährt; in der Tat sind diese Stoffe komprimierbar oder porös und nehmen Quellkräfte auf. Ausserdem dienen sie als Wasserspeicher.

Die Trägerstoffe sollten natürlich billig sein; man kann Abfallerden verwenden, z.B. Abfallschlämme der Rübenzuckerindustrie. Zuckerrüben wachsen in schweren Lehm-bzw. Tonerdeböden, und die erfindungsgemäss bevorzugten anorganischen, erdigen Träger sind solche, die leicht am Saatgut kleben, beim Eintrocknen eine schützende Kruste auf dem Samenkorn oder Keimling hinterlassen und eine Befeuchtung aufrechterhalten, ohne fäulnisfördernd zu sein.

Den Trägerstoffen können geringe Mengen anderer Abfallprodukte wie Kleie, Getreidestaub, Knochenmehl usw. beigegeben werden.

Die Trägermaterialien machen zusammen den grössten Gewichtsanteil der Saatgutpillen aus, und er beträgt typisch 70 bis 90 Gew.-% der Pillen. Das Verhältnis von anorganischer zu organischer Materie liegt bie etwa 4:1 bis 1:1.

## 2. Bindemittel

Da die erfindungsgemässen Saatgutpillen unter möglichst geringem Pressdruck hergestellt werden, wie weiter unten noch erläutert wird, hat es sich als wesentlich erwiesen, ein Bindemittel einzusetzen, durch das die Pillen zusammengehalten werden.

Als Bindemittel sieht die Erfindung ebenfalls nichtquellende Substanzen vor, d.h. nicht beispielsweise Stärke, sondern klebende Stoffe wie Melasse oder Melassebestandteile, Holzzucker, und als anorganischen Binder Wasserglas (das allerdings weniger bevorzugt ist, da es härtend wirkt), sowie Gemische solcher Stoffe. Selbstverständlich können auch andere Stoffe mit den erforderlichen Eigenschaften verwendet werden.

Der Bindemittelanteil macht in der Regel 2 bis 5 Gew.-% der gesamten Pillen aus.

## 3. Wasserrückhaltemittel (Retentionsmittel)

Ein weiterer wichtiger Bestandteil der erfindungsgemässen Saatgutpillen ist ein Wasserrückhaltemittel, das mindestens das 200fache seines Gewichtes an Wasser unter Bildung eines Hydrogels aufnehmen kann. Dabei tritt keine Quellung ein, d.h. das Volumen des Hydrogels ist gleich oder kleiner als die Summe der Volumina des Wassers und des trockenen Rückhaltemittels.

Die Aufgabe des Wasserrückhaltemittels ist es, ein Auswaschen der Pillen durch Beregnung, schmelzenden Schnee usw. zu verhindern und in den Pillen Feuchtigkeit zurückzuhalten, dies aber nicht im Sinne einer Barriere, sondern in Form verzögerter Abgabe. Dadurch bleiben die Saatgutpillen lange, aber nicht übermässig lange feucht und behalten ihre Form und Grösse.

Als Wasserrückhaltemittel haben sich Salze von stärkemodifizierten Polyacrylsäuren bewährt, beispielsweise die Aqua-Gel-Sorten der Miller Chemical & Fertilizer Corporation, Hanover, USA. Sie können das 600- bis 800fache ihres Eigengewichtes an Wasser aufnehmen.

Der Anteil dieser Substanzen in den erfindungsgemässen Saatgutpillen richtet sich nach dem Grad des Rückhaltevermögens. Er liegt im allgemeinen bei 0,25 bis 2 Gew.-%, bevorzugt 0,25 bis 1 Gew.-%.

## 4. Hilfssubstanzen

Als Hilfssubstanzen verwendet man üblicherweise die bekannten Produkte wie Nährstoffe, d.h. normalerweise Volldünger, wobei aber auch Hornmehl, Knochenmehl usw. in Frage kommen, in einer Menge von 0,5 bis 2 Gew.-%, weiterhin Fungizide und andere Pestizide (z.B. 0,01 bis 0,1%), und andere. Die Düngemittel richten sich nach Art und Menge nach den Bodenverhältnissen am gewünschten Einsatzort. Auch sollen die biologischen Bedingungen, nämlich zu erwartender Pilz- und Schädlingsbefall, zuerst für das vorgesehene Gelände ermittelt werden, worauf man Art und Menge - möglichst ein Minimum - der Fungizide und Pestizide für das Pillenrezept festlegt.

## 5. Samen

Die Menge an Samen kann sehr unterschiedlich sein und im Bereich von 0,5 bis 10% der Saatgutpille schwanken. Diese Schwankungen sind durch Grösse, Dichte, Gewicht und Form der Samenkörner bedingt, durch die Grösse und vorgesehene Ablagedichte der Samen, sowie die pro Pille vorzusehende Anzahl der Samenkörner. Es können alle Arten von Samen vorliegen, Beispiele sind Samen der verschiedensten Grassorten, Gemüse, Blumen, Koniferen, Laubsträucher, Getreide, Futtermittelpflanzen wie Klee und Luzerne, Leguminosen, Kräuter, ja selbst Unkräuter wie Melde, die oft eine schnelle Begrünung bewirken.

Die Erfindung betrifft nun weiterhin ein Verfahren zur Herstellung der erfindungsgemässen Saatgutpillen. Danach wird zunächst eine Trägermischung aus den Trägermaterialien hergestellt, die zuvor, wenn nötig, zerkleinert und klassiert worden sind, und diese dann in einer zweiten Stufe mit den restlichen, ebenfalls vorgemischten Bestandteilen gründlich vermischt. Dies sind das Bindemittel, das Wasserretentionsmittel, der Samen und die gegebenenfalls verwendeten Biozide, Nährstoffe usw. Dabei sollen die Trägermaterialien frei von Teilchen über 5 mm Grösse sein. Danach wird das Endgemisch, das krümelige Struktur hat und gegebenenfalls etwas angefeuchtet wurde, zu den Saatgutpillen verpresst. Damit das Verpressen so schonend wie möglich geschieht, wird bevorzugt zweistufig vorgegangen. In einem Vorkompakter einer Walzenpelletierpresse, der den Füllgrad der Pelletierformen bestimmt, werden letztere soweit gefüllt, wie es bei der Verpressung in der zweiten Stufe zur Herstellung zusammenhaltender Saatgutpillen gerade notwendig ist. Dadurch wird ein zu hoher Pressdruck in den Formen der Walzenpelletierpresse vermieden.

Die Masse kann vor dem Pelletieren auf stets gleichen Feuchtigkeitsgehalt angefeuchtet werden. Auch wird es von Fall zu Fall günstig oder erforderlich sein, die Ausgangsbestandteile zu trocknen, insbesondere die Trägermaterialien.

Die herzustelleden Saatgutpillen können eine beliebige Form und Grösse haben. Sie können zylindrisch, kugelig, quader- und würfelförmig, kegelförmig oder noch anders geformt sein. Die Form kann wichtig sein, beispielsweise beim Ausstreuen aus einem Flugzeug. Die Pillen wiegen im allgemeinen etwa 2 bis 10 g bei Abmessungen von etwa 15 x 15 x 6 mm. Zylinder sind bevorzugt gewölbt und haben bei einem Durchmesser von 23 mm eine Randhöhe von 18 und eine Mittenhöhe von 20 mm. Dies ist eine beispielsweise Ausführung.

Beispiel

A. 3 kg Grassamen (gemischt, für Hochgebirgsgräser) werden mit 800 g Volldünger, 50 g eines Pestizidgemischs (Fungizide, Insektizide), 4 kg Holzzucker aus Melasse, 6 kg Vermiculit, 300 g Wasserrückhaltemittel "Aqua-Gel" und 1,5 kg Getreidestaub gründlich vermischt.

B. Grünkomposterde wird von Teilchen mit einer Grösse von über 4 mm durch Absieben befreit. 22 kg des Siebguts werden im Trommelmischer mit 19 kg Rübenwascherde und 44 kg Tongrubenabraum vermischt. Das Gemisch wird dann durch Anfeuchten oder Trocknen auf einen Wassergehalt von ca. 5 Gew.-% gebracht.

C. Die nach A und B erhaltenen Vorgemische werden im Trommelmischer vereinigt und bis zur Homogenität gemischt. Das endgültige Gemisch wird einem Vorkompaktor zugeführt, der den Füllungsgrad der Formen einer Walzenpelletierpresse derart einstellt, dass in der Pelletierpresse zur Pelletierung eine Andrückkraft der Druck- und Füllwalze von 10-12 kN erforderlich wird.

Es werden je nach Pelletierwalze abgerundet quaderförmige Körper erhalten, die 3 bis 7 g wiegen und ca. je 20 Grassamenkörner enthalten.

Ein typisches Rezept der erfindungsgemässen Saatgutpillen ist das folgende, ausgedrückt in Gew.-% der einzelnen Pille:
- Saatgut 0,5 bis 10 %
- Nährstoffe 0,5 bis 2 %
- Biozide 0,01 bis 0,1%
- Bindemittel 2 bis 5 %
- Lockerungsmittel 2 bis 7 %
- Wasserretentionsmittel 0,25 bis 2 %
- Getreidestaub, Kleie 0 bis 3 %
- Grünkomposterde 20 bis 25 %
- Garten- oder Rübenerde 18 bis 20 %
- Tonerde, Abraum 40 bis 45 %

Im Rahmen der Erfindung sind Aenderungen möglich, insbesondere in den Mengenverhältnissen. Sie ist nicht auf die angegebenen Beispiele beschränkt.

Ansprüche

1. Saatgutpillen, die neben einem oder mehreren Samenkörnern Biozide, Nährstoffe sowie in überwiegender Menge organische und anorganische Trägermaterialien enthalten, dadurch gekennzeichnet, dass sie dimensionsstabil sind und als Trägermaterialien im wesentlichen in Wasser unquellbare Substanzen enthalten, dass die Pillen ein Bindemittel, das den Zusammenhalt fördert, sowie ein Wasserretentionsmittel enthalten, das für mindestens das 200fache des Eigengewichtes an Wasser aufnahmefähig ist und dabei ein Hydrogel bildet.

2. Pillen nach Anspruch 1, dadurch gekennzeichnet, dass die Trägermaterialien als Bestandteil ein Lockerungsmittel enthalten, welches dazu befähigt ist, eine Dimensionsvergrösserung der Pille durch Restquellung aufzunehmen.

3. Pillen nach Anspruch 2, dadurch gekennzeichnet, dass das Lockerungsmittel ein poröses oder kompressibles Gesteinsprodukt, insbesondere Vermiculit, ist.

4. Pillen nach Anspruch 1 oder 2, dadurch gekennzeichnet, dass die Trägermaterialien aus organischen und anorganischen Stoffen im Gewichtsverhältnis von 1:1 bis 1:4 zusammengesetzt sind.

5. Pillen nach Anspruch 4, dadurch gekennzeichnet, dass als anorganische Stoffe ton- oder lehmhaltige Erden vorliegen, die klebrig sind und beim Antrocknen auf den Saatkörnern eine Schutzschicht bilden, insbesondere Tongrubenabraum und Zuckerrüben-Wascherde.

6. Pillen nach Anspruch 4, dadurch gekennzeichnet, dass die genannten organischen Stoffe teilabgebaute Pflanzenteile, insbesondere Grünkompost, sind.

7. Pillen nach einem der vorstehenden Ansprüche, dadurch gekennzeichnet, dass als Wasserrückhaltemittel ein Salz einer stärkemodifizierten Polyacrylsäure vorliegt, die in der Lage ist, mit dem 600- bis 800fachen ihres Gewichtes ein stabiles Hydrogel zu bilden.

8. Pillen nach einem der vorstehenden Ansprüche, dadurch gekennzeichnet, dass als Bindemittel Holzzucker, Melasse oder deren Bestandteile vorliegen.

9. Pillen nach einem der vorstehenden Ansprüche, dadurch gekennzeichnet, dass sie ein Gewicht von je 2 bis 10 g besitzen und frei von Bestandteilen mit einer Dimension von mehr als 5 mm sind.

10. Pillen nach einem der vorstehenden Ansprüche, dadurch gekennzeichnet, dass das Gewichtsverhältnis der Trägermaterialien zu den übrigen Bestandteilen 70 bis 90 Gew.-% der Pillen beträgt.

11. Verfahren zur Herstellung der Saatgutpillen nach einem der vorstehenden Ansprüche, dadurch gekennzeichnet, dass man eine erste Vormischung aus den Trägermaterialien und eine zweite Vormischung aus Saatgut, Nährstoffen, den Bioziden, dem Bindemittel und dem Wasserretentionsmittel herstellt, die beiden Vormischungen homogen vereinigt und die erhaltene Endmischung unter niederem Druck und unter entsprechender Dosierung in den Höhlungen einer Walzenpelletierpresse zu Pillen verarbeitet.

12. Verwendung der Saatgutpillen nach einem der Ansprüche 1 bis 10 zur Begrünung von Flächen im Mittel-und Hochgebirge.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | CH-A- 561 021 (D. GERBER) * Spalte 1, Zeile 29 - Spalte 2, Zeile 8; Ansprüche * --- | 1-12 | A 01 N 25/26 A 01 C 1/06 |
| A | DE-A-2 030 186 (ROYAL SLUIS KININKLIJKE ZAAIZAADBEDRIJVEN GEBROEDERS SLUIS N.V.) * Seite 3, letzter Absatz - Seite 4, zweiter Absatzt; Ansprüche 1,4 * --- | 1-12 | |
| A | EP-A-0 164 484 (SECHOIR LA COURTINE) * Ansprüche 1-7,9-11 * --- | 1-12 | |
| A | JOURNAL OF APPLIED POLYMER SCIENCE, Band 32, Nr. 7, 20. November 1986, Seiten 5791-5798, John Wiley & Sons, Inc., New York, US; I.I. ZIDERMAN et al.: "Role of polyacrylate starch copolymer in water sorption" * Seite 5791, erster Absatz * --- | 1-12 | |
| A | CHEMICAL PATENTS INDEX, BASIC ABSTRACTS JOURNAL, Woche 8621, Sektion C, 16. Juli 1986, Zusammenfassung Nr. 133871, Derwent Publications Ltd, London, GB; & JP-A-61 069 854 (LION CORP.) ----- | 1-12 | **RECHERCHIERTE SACHGEBIETE (Int. Cl.5)** A 01 N A 01 C C 08 F |

Der vorliegende Recherchenbericht wurde für alle Patentansprüche erstellt

| Recherchenort | Abschlußdatum der Recherche | Prüfer |
|---|---|---|
| DEN HAAG | 02-03-1990 | RAVANEL C.M. |